**Europäisches Patentamt**

**European Patent Office**

**Office européen des brevets**

(19)

(11) Veröffentlichungsnummer : **0 482 422 B1**

(12) # EUROPÄISCHE PATENTSCHRIFT

(45) Veröffentlichungstag der Patentschrift :
**15.02.95 Patentblatt 95/07**

(51) Int. Cl.⁶ : **H01M 2/02,** G01M 3/26,
H01M 10/42, H01M 6/50

(21) Anmeldenummer : **91117174.2**

(22) Anmeldetag : **09.10.91**

(54) **Verfahren zur Prüfung von Dichtigkeit der Zellen von Starterbatterien mittels Druckluft.**

(30) Priorität : **26.10.90 DE 4034106**

(43) Veröffentlichungstag der Anmeldung :
**29.04.92 Patentblatt 92/18**

(45) Bekanntmachung des Hinweises auf die
Patenterteilung :
**15.02.95 Patentblatt 95/07**

(84) Benannte Vertragsstaaten :
**AT DE ES FR GB IT SE**

(56) Entgegenhaltungen :
**GB-A- 1 400 694**
**US-A- 4 099 404**

(73) Patentinhaber : **VB Autobatterie GmbH**
**Am Leineufer 51**
**D-30419 Hannover (DE)**

(72) Erfinder : **Christophersen, Willi, Dipl.-Ing.**
**Am Teich 7**
**W-3051 Suthfeld (DE)**
Erfinder : **Höcker, Jürgen, Dr. Dipl.-Ing.**
**Plettenbergstrasse 15**
**W-3062 Bückeburg (DE)**

(74) Vertreter : **Kaiser, Dieter Ralf, Dipl.-Ing.**
**Gundelhardtstrasse 72**
**D-65779 Kelkheim (DE)**

**Beschreibung**

Die Erfindung betrifft ein Verfahren zur Prüfung von Dichtigkeit der Zellen von Starterbatterien mittels Druckluft, wobei das Innere jedes Zellengehäuses mit einem definierten Überdruck beaufschlagt und der nach einer bestimmten Zeit eingetretene Druckabfall gemessen wird.

Die heutigen Starterbatterien sind so aufgebaut, daß sie aus mehreren Zellen mit je 2 Volt Nennspannung bestehen, die in Reihe geschaltet in einem gemeinsamen Gehäuse angeordnet sind. Die elektrischen Verbindungen dieser Zellen erfolgen meistens durch die Trennwände hindurch. Über alle Zellen wird ein gemeinsamer Batteriedeckel aufgeschweißt. Es gibt hierbei mehrere Möglichkeiten von Undichtigkeiten zwischen den Zellen. Diese Undichtigkeiten führen zu Kurzschlüssen über den Elektrolyten mit dem Effekt irreversibler Entladung einer oder mehrerer Zellen mit der möglichen Folge des Funktionsausfalls der Batterie, weil die Spannung unter Belastung zusammenbricht.

Die Gewährleistung der Dichtigkeit von Zelle zu Zelle ist also ein wesentlicher Aspekt der Qualitätssicherung von Starterbatterien im Fertigungsprozeß. Neben der automatischen Überwachung aller relevanten Prozeßparameter ist eine 100%ige Überprüfung der Dichtigkeit von Zelle zu Zelle unverzichtbar. Dies soll mit hoher Zuverlässigkeit so früh wie möglich im Fertigungsprozeß geschehen, um sofort eingreifen zu können und die Mehrkosten bei späterer Erkennung im weiteren Verlauf der Fertigung zu verhindern.

Der frühestmögliche Punkt hierfür liegt im Fertigungsfluß direkt nach dem Verschweißen des Deckels mit dem Zellengehäuse. Die Bedingungen an dieser Stelle sind jedoch denkbar schlecht, weil an den modernen, weit automatisierten Batteriemontagelinien die Taktzeiten sehr gering sind.

Die bekannten Methoden zur Prüfung der Dichtigkeit von Zellen beruhen auf dem Prinzip des Druckabfalls über der Meßzeit. Ein Prüfgerät für diesen Zweck und seine Handhabung sind z. B. in der DE-PS 29 14 858 beschrieben. Die Zellen werden mit einem definierten Überdruck beaufschlagt und der Druckabfall in einer bestimmten Zeit gemessen. Es gibt einen für alle Zellen identischen Grenzwert für den größten zulässigen Druckabfall. Nach diesem Kriterium werden die als "undicht" erkannten Batterien automatisch als Ausschuß ausgestoßen.

Der Druckabfall über der kurzen Prüfzeit, die wegen der Taktzeit des Bandes nur wenige Sekunden lang sein kann, wird aber von verschiedenen Einflüssen so stark beeinträchtigt, daß der Druckabfall allein aufgrund einer Undichtigkeit zwischen den Zellen überdeckt wird.

Diese Einflüsse sind hauptsächlich das freie Gasvolumen jeder Zelle, das sich ganz besonders unterscheidet zwischen dem mit Elektrolyt gefüllten Zustand und - wie in der Montagelinie - dem ungefüllten Zustand der Zelle. Aber auch die Einbauten, wie Elektrodenzahl und Separationsart haben einen großen Einfluß auf das freie Gasvolumen.

Das Wegfließen des Gehäusematerials, ganz besonders bei dem heute üblichen Polypropylen und anderen Kunststoffen unter dem Prüfdruck hat ebenso großen Einfluß wie die geometrischen und konstruktiven Gegebenheiten der Zellengehäuse. Daraus ergibt sich auch bereits ein von Zelle zu Zelle unterschiedlicher Druckabfall, der die geforderte Prüfgenauigkeit weit übersteigt.

Ganz wesentlich ist auch der Einfluß der Temperatur bzw. der aufgespeicherten Wärmemengen in der Zelle. Die vorangegangenen Arbeitsgänge "Verbinder schweißen" und "Deckel aufschweißen" haben zur Folge, daß bei der anschließenden automatischen Dichtigkeitsprüfung ein undefinierter Wärmehaushalt in der Zelle gegeben ist, der auch durch eine Temperaturkompensation, d. h. Messen der Temperatur des Prüflings und rechnerische Berücksichtigung des Einflußes, nur unzulänglich erfaßt werden kann.

Der aktuelle Stand der Technik ermöglicht also nicht eine absolute Dichtigkeit von Zelle zu Zelle frühestmöglich im Fertigungsprozeß zu prüfen, weil die dort geforderte Prüfgenauigkeit durch ständig variierende Einflußgrößen technisch nicht zu realisieren ist.

Der Erfindung liegt daher die Aufgabe zugrunde, anknüpfend an die bisher praktizierte Messung des Druckabfalls eine Prüfmethode anzugeben, bei welcher die eben dargelegten unterschiedlichen Störeinflüsse weitgehend ausgeschaltet sind und das Prüfergebnis hinsichtlich der Dichtigkeit eine wirklich zuverlässige Gut-Schlecht-Aussage über die fertige Batterie gestattet.

Die Aufgabe wird erfindungsgemäß durch ein Verfahren gelöst, wie es im Patentanspruch 1 definiert ist.

Danach werden die am Ende einer gewissen Einwirkungsdauer des Prüfdrucks gemessenen Druckabfallwerte in einem Rechner gespeichert und mit vorgegebenen Werten verglichen, wobei gefundene Differenzen, wenn diese einen festgelegten maximalen Betrag übersteigen, eine fehlerhafte Batterie anzeigen, die daraufhin ausgesondert wird.

Erfindungswesentlich ist aber, daß die Vorgabewerte als Grenzwerte des Druckabfalls bei dichten Batterien nicht für alle Zellen gleich sind, was zu erwarten wäre, sondern sich von Zelle zu Zelle unterscheiden. Dem neuen Prüfverfahren liegt nämlich der durch zahlreiche Messungen erhärtete Befund zugrunde, daß die Druckabfallwerte bei den inneren Zellen der Batterie grundsätzlich niedriger liegen als bei den außenliegenden Zellen, wo sie stets zwei zueinander symmetrische Maxima besitzen. Die Dichtigkeitsprüfung muß sich demnach an Vergleichswerten orientieren, die so gewählt sind, daß sie dem eben erwähnten Befund Rechnung tragen, indem also den inneren Zellen niedrigere und den äußeren Zellen höhere Vorgabewerte zugeordnet sind.

Die Vorgabewerte können dadurch erhalten werden, daß man aus Meßwerten für die jeweilige Einzelzelle, die man bei vielen Batterie-Messungen gewonnen hat, das arithmetische Mittel bildet.

Von den gemessenen Druckabfallwerten der 6 Zellen einer Starterbatterie beispielsweise darf also angenommen werden, daß sie um eine gekrümmte Linie oder Kurve streuen, die nach oben geöffnet ist und zwischen zwei Maxima an den Seiten in der Mitte ein Minimum (Scheitelpunkt) aufweist. Gemäß der Erfindung stellt eine solche Kurve für jede Starterbatterie ungeachtet ihrer individuellen und konstruktiven Gegebenheiten ein übergeordnetes Charakteristikum dar. Es wird dadurch geprägt, daß der Druckabfall in den innenliegenden Zellen der Batterie kleiner als außen ist, weil die außenliegenden Zellwände verständlicherweise dem Innendruck (Prüfdruck) mehr nachgeben.

Alle weiter vorn erwähnten Einflüsse auf den absoluten Druckabfall in einer dichten Zelle können lediglich die Lage dieser batterietypabhängigen Linie, die auch mathematisch beschreibbar ist, verändern, nicht aber deren Charakteristik.

Zu einer vorzugsweisen Ausgestaltung des erfindungsgemäßen Verfahrens wird für jede Batterie zu den gemessenen und gespeicherten Druckabfallwerten der Einzelzellen eine Ausgleichsrechnung vorgenommen und die zugehörige Ausgleichskurve ermittelt, welche sich den Meßwerten möglichst gut anpassen soll. Aus der Funktionsgleichung für die Ausgleichskurve lassen sich dann die vorzugebenden Sollwerte errechnen. Zwischen den Meßwerten und den Vorgabewerten wird nun verglichen und bei Abweichungen, die einen festgelegten Betrag nach oben oder unten übersteigen, die Batterie als undicht erkannt.

Als eine besonders günstige Ausgleichskurve bei dem neuen Prüfverfahren läßt sich die Parabel verwenden, weil sie jeder Druckabfallcharakteristik als nach oben geöffnete Kurve mit guter Näherung angepaßt werden kann und ihre mathematische Behandlung wenig aufwendig ist.

Die allgemeine Gleichung für eine Parabel in der Polynomform lautet:

$$y = a_0 + a_1 \cdot x + a_2 \cdot x^2 \quad (1)$$

Diese Gleichung hat für jede Zelle x der Batterie ($x_1 \ldots x_6$ bei einer 6-zelligen Starterbatterie) eine Lösung y ($y_1 \ldots y_6$) für den Druckabfall in der jeweiligen Zelle; sie liefert damit die berechneten Vorgabewerte. Dabei enthält der Koeffizient $a_0$ den Wert des Minimums der Parabel, der ein Maß für die absolute Lage der gemessenen Druckverluste ist; der Koeffizient $a_2$ stellt ein Maß für die Öffnung der Parabel dar; der Koeffizient $a_1$ kann vereinfachend zu Null gesetzt werden, wenn die Batterie symmetrisch aufgebaut ist und ihre Symetrieebene mit der Parabelachse (y-Achse) zusammenfällt.

Die Bestimmung der Koeffizienten $a_0$ und $a_2$ erfolgt nach bekannten mathematischen Verfahren (vgl. z. B. R. Zurmühl, Praktische Mathematik, 5. Auflage, Berlin 1965) in der Weise, daß die Summe der quadratischen Abweichungen minimal wird.

In einer noch weitergehenden Ausgestaltung der Erfindung werden alle gefundenen Abweichungen der Meßwerte einer Batterie von den errechneten Werten der Ausgleichsparabel nach oben oder unten quadriert, die Quadrate zu einer Fehlerquadratsumme Q addiert und die Batterie dann als undicht ausgesondert, wenn die Fehlerquadratsumme größer als ein festgelegter Toleranzwert ist.

Einige Figurendarstellungen sollen das erfindungsgemäße Prüfverfahren, insbesondere in seiner zuletzt genannten und besonders bevorzugten Abwandlung, anschaulich machen.

Figur 1 zeigt mit den Teilfiguren a und b eine typische Druckabfallcharakteristik bei einer 6-zelligen Batterie mit dichten Zellen.

Figur 2 zeigt die Korrelation zwischen den gemessenen und den berechneten Abfällen des Prüfdrucks bei einer 6-zelligen dichten Batterie.

Figur 3 zeigt die Korrelation der gemessenen und berechneten Druckabfälle im Fall einer undichten Batterie

Figur 4 zeigt die Korrelation der gemessenen und berechneten Druckabfälle im Fall einer anderen undichten Batterie

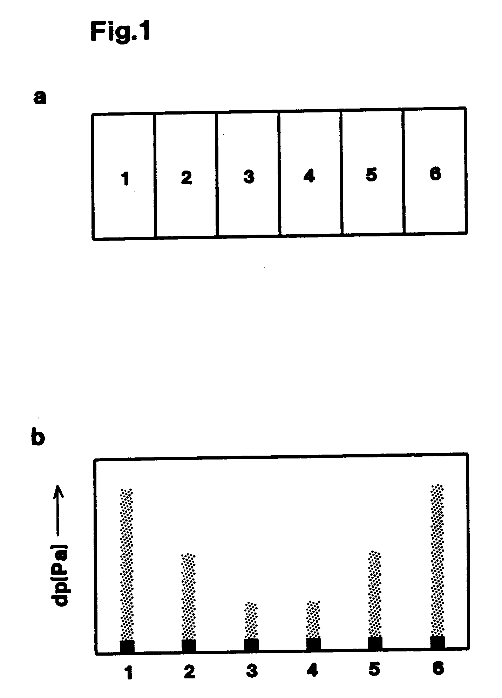

Nach Figur 1b verhalten sich die Druckabfälle dp, gemessen in Pascal, in den Zellen der Batterie von Figur 1a nicht gleich, sondern liegen auf einer parabelähnlichen Kurve. Die einer solchen Kurve zugrundeliegende Funktionsgleichung erlaubt es, die Druckabfälle in dichten Zellen auch theoretisch zu berechnen. Sie bilden die korrekte Vergleichsgrundlage für undichte Zellen.

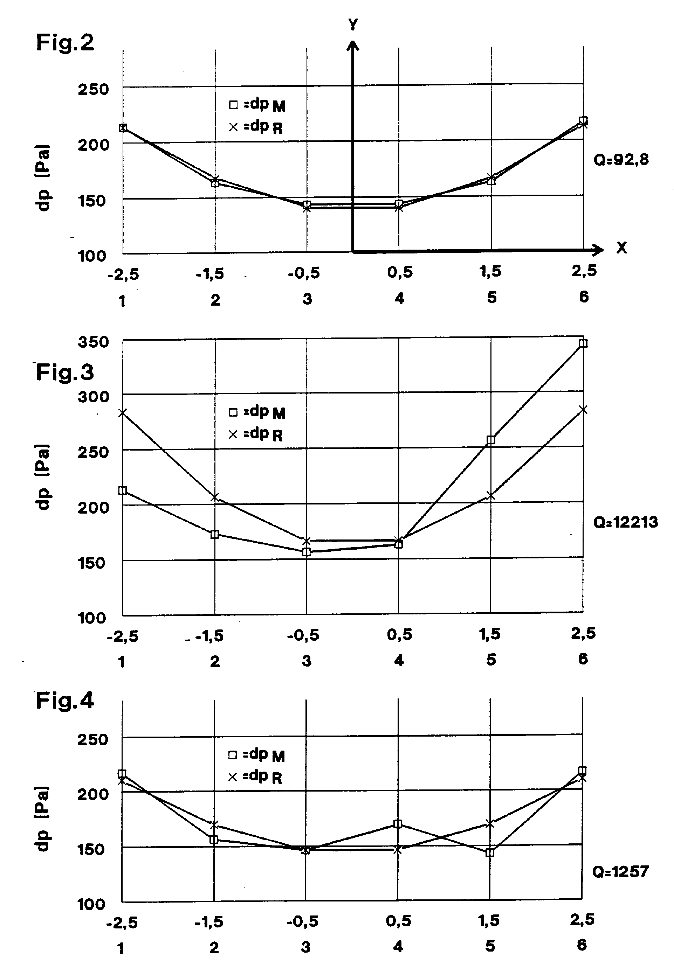

Gemäß Figur 2 sind die gemessenen Druckabfallwerte $dp_M$ [Pa] für eine 6-zellige Starterbatterie in ein x/y-Koordinatensystem eingetragen. Die korrespondierenden Vorgabewerte $dp_R$ bilden die Ausgleichsparabel. Da die Batterie symmetrisch aufgebaut ist, sind die äquidistanten Zellen 1 bis 6 zweckmäßig in den Abständen und Bezeichnungen -2,5, -1,5, -0,5, 0,5, 1,5, 2,5 auf der x-Achse geordnet, so daß die Symmetrieebene zwischen der 3 und 4. Zelle mit der y-Achse der Parabel (Achse der Druckabfälle) zusammenfällt. Dies vereinfacht die Berechnung der Vorgabewerte.

Die Abweichungen der Meßwerte von den vorgegebenen Werten sind sehr gering, entsprechend auch die Summe der Fehlerquadrate Q. Der Betrag Q = 92,8 liegt innerhalb einer -hier nicht bezifferten- Toleranz : es liegt eine dichte Batterie vor.

In einem anderen Beispiel gemäß Figur 3 weichen die Meßwerte und die Vorgabewerte auf der Ausgleichsparabel stärker voneinander ab. Ausschlaggebend für die Beurteilung der Batterie ist hier jedoch ein Ausbruch der Meßwerte für die Zellen 5 und 6 aus der parabelförmigen Charakteristik, der auf ein Leck in diesem Bereich hindeutet. Die Fehlerquadratsumme Q = 12213 übersteigt in diesem Fall einen festgelegten Toleranzwert.

In Figur 4 deutet der Ausbruch des Meßwertes von Zelle 4 auf ein Leck in dieser Zelle hin. Wegen der guten Anpassung der Ausgleichsparabel an die Kurve der Meßwerte - ähnlich wie in Figur 2- ist die hier als Toleranzgrenze festzulegende Fehlerquadratsumme von Q = 1000, die sich ohne den "Ausreißer" ergibt, entsprechend klein. Sie wird aber durch das gefundene Q = 1257 signifikant überschritten: die Batterie ist auszusondern.

Bei dieser vorzugsweisen Durchführung des erfindungsgemäßen Prüfverfahrens bleibt also die jedesmal durch Rechnung gefundene Größe Q ein charakteristisches Maß für eine Undichtigkeit.

Grundlage des Verfahrens ist aber die Orientierung an unterschiedlichen Grenzwerten des Druckabfalls, welche die Anordnung der jeweiligen Zelle im Zellenverbund der Batterie berücksichtigen, also "stellungsspezifisch" sind. Dabei spielt die Reihenfolge, in der die Zellen geprüft werden, z. B. 1-3-5-2-4-6 bei einer 12 Volt Batterie, keine Rolle, weil es für das Kriterium "dicht" oder "undicht" auf die Charakteristik ankommt, zu der sich die Druckabfälle aller Zellen einer Batterie zueinander ordnen müssen.

**Patentansprüche**

1. Verfahren zur Prüfung von Dichtigkeit der Zellen von Starterbatterien mittels Druckluft, wobei das Innere jedes Zellengehäuses mit einem definierten Überdruck beaufschlagt und der nach einer bestimmten Zeit eingetretene Druckabfall gemessen wird, dadurch gekennzeichnet, daß die gemessenen Druckabfallwerte der Einzelzellen gespeichert werden, daß die Werte mit vorgegebenen Werten verglichen werden, wobei die Vorgabewerte in ihrer Höhe so gewählt sind, daß sie auf einer Kurve liegen, die ein mit den inneren Zellen der Batterie korrespondierendes Minimum aufweist und die den Außenzellen der Batterie zugeordnete symmetrische Maximalwerte besitzt, und daß die Batterie als undicht ausgesondert wird, wenn die gemessenen Druckabfallwerte von den vorgegebenen Werten über einen festgelegten Betrag hinaus nach oben oder unten abweichen.

2. Verfahren nach Anspruch 1, dadurch gekennzeichnet, daß für jede Batterie zu den gemessenen und gespeicherten Druckabfallwerten der Einzelzellen durch Ausgleichsrechnung eine Ausgleichskurve ermittelt wird, daß die gemessenen Werte mit den korrespondierenden, aus der Funktionsgleichung für die Ausgleichskurve errechneten Werten verglichen werden, und daß die Batterie als undicht ausgesondert wird, wenn die Abweichungen der Meßwerte von den Vorgabewerten der Ausgleichskurve einen festgelegten Betrag nach oben oder unten übersteigen.

3. Verfahren nach Anspruch 2, dadurch gekennzeichnet, daß die Ausgleichskurve eine Parabel ist.

4. Verfahren nach Anspruch 3, dadurch gekennzeichnet, daß alle Abweichungen der gemessenen Werte von den errechneten Werten der Ausgleichsparabel nach oben oder unten quadriert werden, daß diese Quadrate zu einer Fehlerquadratsumme Q addiert werden und daß die Batterie als undicht ausgesondert wird, wenn die Fehlerquadratsumme einen festgelegten Toleranzwert übersteigt.

**Claims**

1. Method of testing the sealing of cells of starter batteries by means of compressed air, wherein the interior of each cell housing is pressurized with a defined overpressure and the pressure drop which occurs after a specific time is measured, characterized in that the measured pressure drop values of the individual cells are stored, that the values are compared to preselected values, with the preselected values in terms of their magnitude being selected in such a way that they lie on a curve which has a minimum corresponding to the inner cells of the battery and which has symmetrical maximum values associated with the outer cells of the battery, and that the battery is segregated as leaky when the measured pressure drop values vary from the preselected values by more than a fixed amount in an upward or downward direction.

2. Method according to claim 1, characterized in that, for each battery, a compensation curve is determined by balancing calculation for the measured and stored pressure drop values of the individual cells, that the measured values are compared to the corresponding values calculated from the function equation for the compensation curve, and that the battery is segregated as leaky when the variations of the measured values from the preselected values of the compensation curve exceed a fixed amount in an upward or downward direction.

3. Method according to claim 2, characterized in that the compensation curve is a parabola.

4. Method according to claim 3, characterized in that all of the variations of the measured values from the calculated values of the compensation parabola are squared upwards or downwards, that said squares are added to form a sum of error squares Q and that the battery is segregated as leaky when the sum of error squares exceeds a fixed tolerance value.

**Revendications**

1. Procédé pour contrôler l'étanchéité des cellules de batteries de démarrage au moyen de l'air comprimé, procédé dans lequel l'intérieur de chaque bac de cellule est alimenté avec une surpression définie et la chute de pression intervenue après un temps déterminé est mesurée, procédé caractérisé en ce que des valeurs de chute de pression mesurées des différentes cellules sont mémorisées, en ce que ces valeurs sont comparées à des valeurs prédéfinies, les valeurs prédéfinies étant choisies à leur niveau de façon telle qu'elles se situent sur une courbe qui comporte un minimum correspondant aux cellules internes de la batterie et qui présente des valeurs maximales symétriques associées aux cellules externes de la batterie, et en ce que la batterie est éliminée en tant que non étanche, lorsque les valeurs de chute de pression mesurées diffèrent vers le haut ou vers le bas des valeurs prédéfinies au-delà d'une quantité fixée.

2. Procédé selon la revendication 1, caractérisé en ce que pour chaque batterie et pour les valeurs de chute de pression mesurées et mémorisées des cellules individuelles, une courbe de compensation est déterminée par un calcul de compensation, en ce que ces valeurs mémorisées sont comparées avec les valeurs correspondantes calculées à partir de l'égalité fonctionnelle pour la courbe de compensation, et en ce que la batterie est éliminée comme non étanche lorsque les écarts entre les valeurs de mesure et les valeurs prédéfinies de la courbe de compensation dépassent vers le haut ou vers le bas une quantité fixée.

3. Procédé selon la revendication 2, caractérisé en ce que la courbe de compensation est une parabole.

4. Procédé selon la revendication 3, caractérisé en ce que tous les écarts vers le haut ou vers le bas entre les valeurs mesurées et les valeurs calculées de la parabole de compensation sont élevés au carré, en ce que ces carrés sont totalisés pour obtenir une somme Q des carrés d'erreur et en ce que la batterie est alors rejetée comme non étanche, lorsque la somme des carrés d'erreur est supérieure à une valeur de tolérance fixée.

# Fig.1

**a**

**b**

**Fig.2**

**Fig.3**

**Fig.4**